# EUROPEAN PATENT SPECIFICATION

(11) **EP 2 958 510 B1**
(45) Date of publication and mention of the grant of the patent: **15.04.2020**
(21) Application number: 14711629.7
(22) Date of filing: 21.02.2014
(51) Int. Cl.: A61C 5/50

(54) **PROCESS OF MAKING MULTI-TAPER DENTAL ROOT CANAL FILLING POINTS/CONES**
VERFAHREN ZUR HERSTELLUNG VON ZAHNÄRZTLICHEN MULTIKEGEL-WURZELKANALFÜLLUNGSPUNKTEN/-KEGELN
PROCÉDÉ DE FABRICATION DE CÔNES D'OBTURATION CANALAIRE À PLUSIEURS CONICITÉS

(30) Priority: 21.02.2013 US 201361767254 P; 14.02.2014 US 201461940367 P
(43) Date of publication of application: 30.12.2015
(73) Proprietor: Tulsa Dental Products LLC, Tulsa, OK 74135 (US)
(72) Inventor: LI, Nathan, Y., Lancaster, CA 93534 (US); WU, DaQing, Lancaster, CA 93534 (US)
(74) Representative: Hartz, Nikolai
(86) International application number: PCT/US2014/017852
(87) International publication number: WO 2014/130903

(56) References cited:
- EP-A2- 2 298 226
- US-A- 5 302 129
- US-A1- 2008 274 439
- US-A1- 2011 129 793
- US-A1- 2013 056 908

## Description

### BACKGROUND OF THE INVENTION

### 1. Field of the Invention

The present invention is directed to materials for filling dental root canals, and in particular dental root canal filling cones.

### 2. Description of Related Art

Dental root canal treatment generally involves three stages: shaping, cleaning and obturation (generally involving filling and sealing). The purpose of performing dental root canal treatment is to remove infected dental pulp tissue inside the pulp chamber and root canals, and to fill/seal the vacant space with a biocompatible material. More specifically, the ultimate objective of root canal treatment is to eliminate the infection inside the dental root system and to tightly seal or obturate, in three dimensions (3-D), the tiny openings at the end of the root canal, (referred in the profession as an apex). Failure to completely seal the apex or the root canal in 3-D leads to micro-leakage, which will lead to future bacteria colonization inside the root canal system, and re-infection and possible loss of the tooth. Micro-leakage is the most common cause of tooth failure.

Heretofore, root canal treatment processes involve placement of a root canal filling and/or sealing point or cone in a prepared root canal to plug the root canal, ideally in a manner to eliminate micro-leakage. Hereinafter, the term "point" and "cone" will be used interchangeably to refer to dental root canal filler/sealer. In the past twenty-plus years, leading dentists and scientists have improved and revolutionized the shaping and cleaning part of the root canal treatment process. But the basic filling technique still lags behind due to antiquated manufacturing process dated more than 50 years ago. The existing filling points and the process of application thereof do not lend themselves well to providing a good seal of the root canal apex.

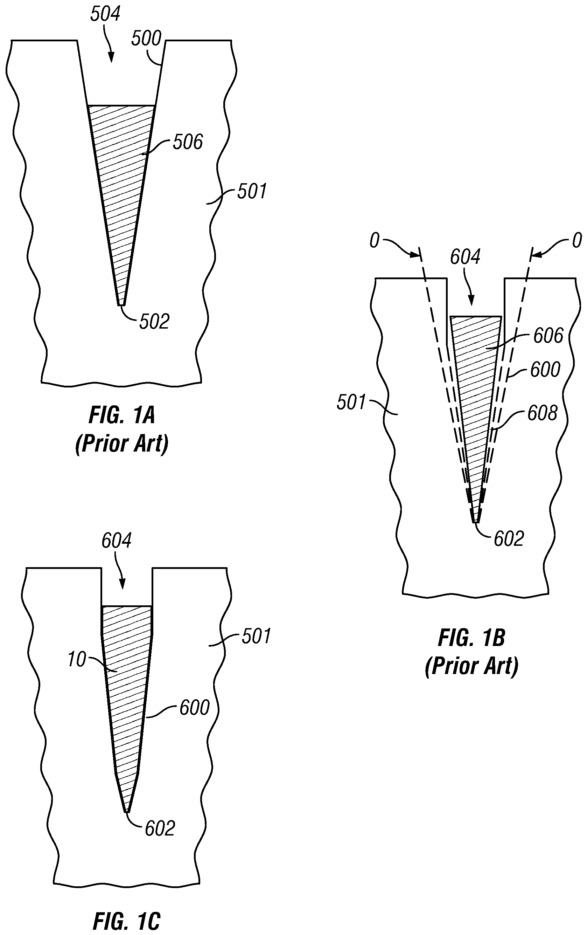

More specifically, traditional root canal shaping and cleaning files are round shaped in cross section with single continuous taper across the entire file cutting section, from front tip end to rear end meeting the handle shaft. Different file systems carry different taper pitches. They typically range from 2% taper to 8% taper (the extent of taper can be express as a taper angle in degrees, or as a taper pitch in % of unit axial length). Referring to the schematic depiction in Fig. 1A (the taper angles are exaggerated for illustration purposes), after using one of these files to shape and clean a root canal 500 in a tooth 501, the internal root canal space will be a round, conical, tapered, cone shape, with narrowest diameter at the very end of the root canal tip called apex 502, and widest diameter at the very beginning of the root canal called orifice opening 504. Dental root canal points or cones 506 are made to match these shaping and cleaning files in diameters and tapers to serve as a filler and sealer material. Given the taper of the file used to prepare the single-taper root canal 500 for using the single-taper cone 506, the orifice opening 504 is necessarily large.

Years ago, Dr. Herbert Schilder developed new root canal shaping and cleaning concept known as deep shaping. Dr. Schilder believes (and proven to be correct) that most of the infectious pathogens are harbored inside root canal space near the apex area. In order to effectively clean out these pathogens, a more effective cleaning file is needed; i.e., a file that has more than the traditional 2% taper. After this new concept took root, a new generation of endodontic files was developed. They are called greater taper (GT) files. The tapers of these files range from 4% to 8%. Dental root canal cones with matching tapers were also developed. After several years of clinical trial of these new files, clinician realized that greater taper files did clean root canal apex portion better, but its continuous single greater taper design makes the file diameter too big at the orifice portion of the root canal. As a result, the orifice opening 504 of the root canal gets over shaped, loses too much healthy root structure, and results in root fracture or even lateral perforation.

About ten years ago, a team led by Dr. John West further improved on the Dr. Schilder file system to resolve the problem of over-shaping of the root canal at the orifice opening portion. What this team did was to have multiple tapers built into single file, in a reduction sequence from root canal apex to the orifice opening. This new file system is called Progressive Tapering Files. Each file has progressively reducing tapers, which shapes a root canal having a 6% to 8% taper at the apical 5 mm portion of a root canal, and from there, the taper gets reduced every few millimeter moving towards the orifice portion of the root canal. Referring to the schematic depiction of Fig. 1B, as a result of progressively reducing tapers in the root canal 600 prepared in the tooth 501 (the tapers at the apex 602 and orifice opening 604 are schematically illustrated, with intermediate tapers indicated by broken lines), the diameter of the orifice opening 604 of the root canal is significantly smaller compared to the corresponding diameter of the orifice opening 504 made with a single taper file in Fig. 1A for an orifice opening 602 or similar size and taper as the orifice opening 502 in Fig. 1A. Therefore, the orifice opening 604 would not be over shaped, thereby would not result in a weakened root canal structure. This file system has been dominating the market with more than 65% of the market share.

The most commonly used root canal filling material for many years is a biocompatible latex compound commonly called Gutta Percha, which comprises trans-polyisoprene, with a chemical composition of 1,4-trans-polyisoprene (TPI). Gutta Percha can be softened by heat to increase its plasticity comparing to other rubber based material. It is chemically inert therefore it is more biocompatible. Gutta Percha also hold its dimension quite well when change from heated liquid alpha phase to cooled solid beta stage.

The way to use Gutta Percha to fill/seal the root canal is to make it into a tapered cone shape "cone" or "point", commonly called Gutta Percha point or cone. Heretofore, root canal filling points are formed of a filling material that is shaped into slender cones each having a small taper angle (e.g., 5-10 degrees). Each point is made into a particular taper shape that matches the shaping instrument (file) used by dentists to shape a root canal cavity for subsequent filling. The traditional way of making these points is by manual labor, specifically hand rolling Gutta Percha material into points to match shaping files. The Gutta Percha material needs to be softened first with higher temperature. Then being rolled into the point while being cooled to hold the final shape. This method of making the points has been in existence for over 50 years without much change. It is grossly inaccurate and risks material contamination since it is mostly handled by human hands.

There are a few automated and/or semi-automatic systems designed to make Gutta Percha points. They share same basic design approach, which mimic human hands rolling motion. These machines either use two rollers or one roller against one moving belt to roll points. There are several short comings with these machines. They are rather unstable and not efficient enough. They need constant adjustments for accuracy. Further, they are limited to rolling cones using only Gutta Percha based materials but not materials that have a different consistency compared to Gutta Percha materials.

All Gutta Percha cones fitting for Greater Taper (GT) files have been hand rolled. Hand rolling can only produce single taper cones. For obvious reason, these single taper Gutta Percha cones would not fit well in root canals prepared by Progressive Tapering Files. Referring to Fig. 1B, in order to have a Gutta Percha cone 606 fully inserted all the way into the apex opening of a root canal prepared by a Progressive Tapering File, a single-taper Gutta Percha cone 506 having a smaller taper has to be used in order to pass through the orifice opening 604 portion of the root canal 600 having a reduced diameter compared to a corresponding diameter created by a Greater Taper file (e.g., as shown in Fig. 1B). As a result, the taper of Gutta Percha cone 606 at the tip region is significantly smaller than the actual taper of the root canal space in the apex 602 region, thus creating a small gap 608 therebetween. This created a new problem - inferior seal and potential micro-leakage. Apical leakage is the leading cause for root canal re-infection. All leading experts tried but failed to solve this file / cone mismatching problem.

US Patent No. 5,089,183 discloses a method of manufacturing appliances for use in filling endodontically prepared root canals with filler material, which involves inserting a shaft of a carrier into an uncured Gutta Percha material provided in a cavity of a block, heating and allowing the material to adhere to the carrier shaft. This process is low throughput, as it adds further complication to the making of a filler point for root canal.

It can be seen that the current root canal treatment procedures involve complex and challenging steps, which use cones that may be improperly shaped, which results in poor obturation leading to micro-leakage. An improved cone structure is desired to complement the Progressive Tapering Files. Further, It would be desirable to develop an improved root canal filling cone that lend itself to mass production, and a manufacturing process for high throughput production of root canal filling cones. US 2008/274439 A1 discloses a kit of parts containing a dental device and a dental sealant composition. EP 2298226 A2 discloses a Gutta Percha tip used as a dental tool in a root canal filling operation.

### SUMMARY OF THE INVENTION

The present invention relates to the subject matter of claim 1. Also disclosed is an improved root canal filling point/cone having a structure that can be manufactured precisely to result in better obturation with less micro-leakage.

Disclosed herein is a molded root canal filling point having progressively decreasing tapers from the smaller tip end to the larger end. The present invention is directed to a thermo-pressure molding process for manufacturing root canal filling appliances (e.g., Gutta Percha points).

The multi-taper cones provided by the method of the present invention each has a generally axisymmetric conical structure, wherein at least a section along the length of the cone has a tapered structure, wherein the taper angle varies progressively in the axial direction to result in a multi-taper or variable taper conical structure. The taper angle may vary in small, discrete incremental steps along the length of the point, thus forming a structure having adjoining conical sections having different and discretely varying tapers at different axial sections along the length. The axial length of the conical sections maybe similar or different. The taper angle may vary continuously, gradually and smoothly along the length of the point to form a gradual arcuate or curved surface profile in the axial direction representing continuously varying taper angles (represented by the varying angles of the tangents to the curved surface). There may be a combination of continuously varying tapers and discretely varying tapers along the length of the cone.

The present invention will be described herein-below in reference to root canal filling points made of endodontic filler material including what is known as Gutta Percha, for example. However it is understood that the present invention could be applied to manufacturing root canal filling points based on other types of endodontic filler materials.

### BRIEF DESCRIPTION OF THE DRAWINGS

For a fuller understanding of the nature and advantages of the invention, as well as the preferred mode of use, reference should be made to the following detailed description read in conjunction with the accompanying drawings. In the following drawings, like reference numerals designate like or similar parts throughout the drawings.
Fig. 1A is a schematic depiction of a prior art single-taper root canal filling cone in a root canal prepared with a prior art single-taper file; Fig. 1B is a schematic depiction of a prior art single-taper root canal filling cone in a root canal prepared with a Progressive Tapering File; Fig. 1C is a schematic depiction of a multi-taper root canal filling cone in a root canal prepared with a Progressive Tapering File.
Fig. 2A is a schematic illustration of a single-taper root canal filling cone; Fig. 2B is an orthogonal view of Fig. 2A.
Fig. 3A is a schematic illustration of a multi-taper root canal filling cone; Fig. 3B is an orthogonal view of Fig. 3A.
Fig. 4A is a schematic illustration of a multi-taper root canal filling cone; Fig. 4B is an orthogonal view of Fig. 4A.
Fig. 5A is a schematic illustration of a multi-taper root canal filling cone; Fig. 5B is an orthogonal view of Fig. 5A.
Fig. 6 is a schematic sectional view illustrating a prior art split mold.
Fig. 7A is a schematic perspective view illustrating a split mold; Fig. 7B is a schematic sectional view taken along line B-B in Fig. 7A; and Fig. 7C is an exploded sectional view.
Fig. 8A is a schematic top view of a rack of molded cones; Fig. 8B is a schematic sectional view taken along line B-B in Fig. 8A; Fig. 8C is a photograph image of a top view of a rack of injection molded cones; Fig. 8D is a photograph image of the underside of a rack of cones.
Fig. 9 is a photograph image of a vertical injection molding system.
Fig. 10 is a photograph image of a mold halve of a split mold.
Fig. 11 is a photograph image of a matching mold halve of a split mold.
Fig. 12 is a photograph image of a rack of injection molded cones.
Fig. 13 is a photograph image of a horizontal injection molding system.

### DETAILED DESCRIPTION OF THE PREFERRED EMBODIMENTS

This invention is described below in reference to various embodiments with reference to the figures.

The present invention is in relation with an improved root canal filling point/cone having a structure that can be manufactured precisely to result in better obturation with less micro-leakage. Disclosed herein is a molded root canal filling point having progressively decreasing tapers from the smaller tip end to the larger end. The present invention is directed to a thermo-pressure molding process for manufacturing root canal filling appliances (e.g., Gutta Percha points).

The present invention will be described herein-below in reference to root canal filling points made of endodontic filler material including what is known as Gutta Percha, for example. However it is understood that the present invention could be applied to manufacturing root canal filling points based on other types of endodontic filler: materials .

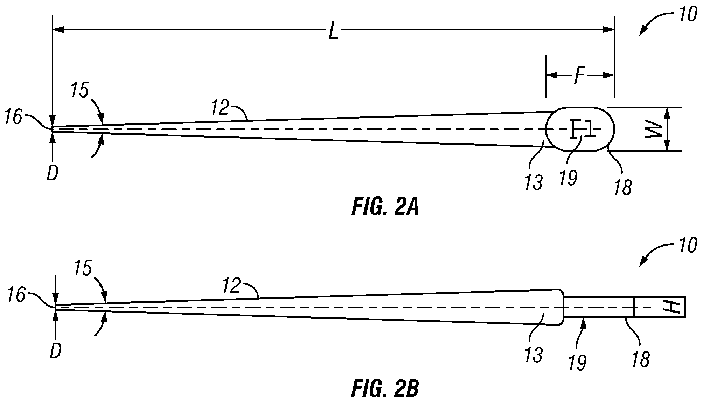

Figs. 2A and 2B illustrate a dental root canal filling cone (or point) 10. The cone 10 comprises a generally conical body 12 comprising a heat flowable material, such as Gutta Percha. The cone body 12 has a thick or large tail end 13 and a tapered thin or small tip end 16, which has a taper angle 15 that fits in the apex end of a prepared root canal cavity (the taper angle at the apex of the cavity being defined using a file tool known in the dentistry field). The diameter of each diametric section along the longitudinal axis of the body 12 is substantially circular, up to the large tail end 13. Extending beyond the large tail end 13 is a flat tab 18. An identification indicia 19 (e.g., alphanumeric) may be provided on the flat surface of the tab 18, to facilitate the user (dentist) to distinguish the particular configuration of the cone 10 (e.g., the indicia corresponds to a particular size, taper angle, material, etc.). During a dental root canal treatment process, the cone body 12 is inserted into the prepared root canal cavity. The tab 18 (along with excessive section of the body 12 that is not needed) can be removed by cutting before or after insertion. Heat is applied to the large end 13 using a heating tool (e.g., a heat gun). As the Gutta Percha material softens under the applied heat, the material flows in the root canal cavity to fill the root canal. Ideally, sufficient heat reaches the small end 16 of the cone 10 to flow the material to completely fill the apex of the root canal cavity.

The general dimensions of the body of the cone 10 may be within the following ranges, for example:
a. Overall length L of cone 10: between 20 to 50 mm; or preferably between 25 to 35 mm.
b. Diameter of the small tip end 16: between 0.01 to 0.3 mm; or preferably between 0.01 to 1.8 mm.
c. Diameter of the large end 13: between 0.5 to 5 mm; or preferably between 0.8 to 2.5 mm.
d. Taper angle: between 2° to 15°; or preferably between 5° to 12°.
e. Length F of tab 18: between 3 to 5 mm; or preferably between 1.5 to 3.5 mm.
f. Thickness H of tab 18: between 0.5 to 3 mm; or preferably between 0.8 to 2.8 mm.

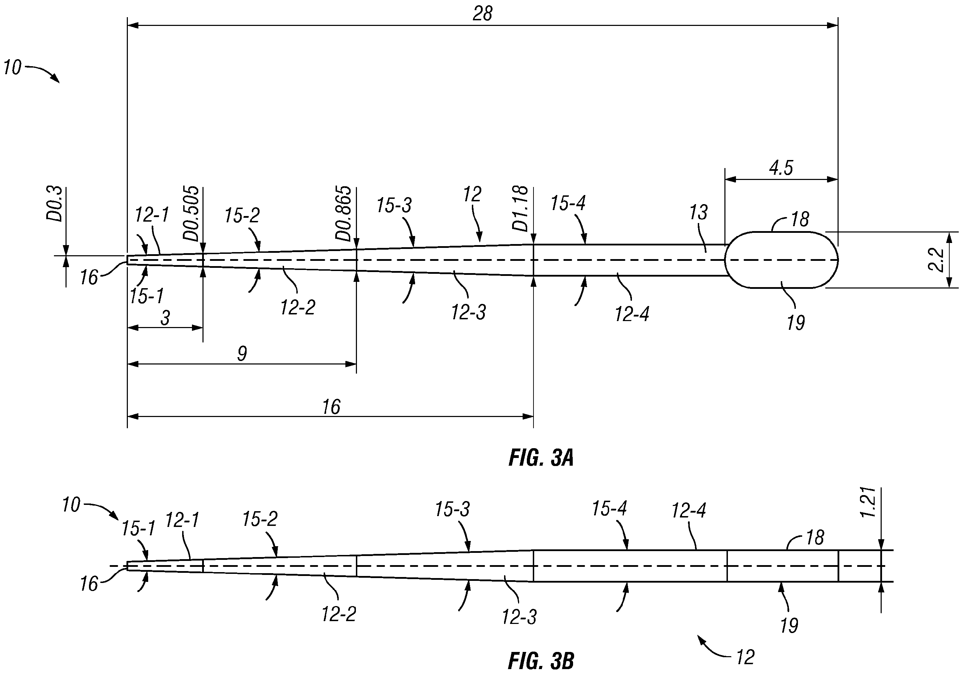

Concerning the taper of the cone 10, the cone 10 may have a single taper angle for substantially its entire length (i.e., a single-taper cone as shown in Fig. 2), or a different taper angle for different longitudinal sections along its length (i.e., multi-taper cones, e.g., shown in Figs. 3-5). To this date, while clinicians use Progressive Tapering File system, no one thought of providing multi-taper cones to complement such multi-taper file system.

The multi-taper Gutta Percha cones each has a generally axisymmetric conical structure, wherein at least a section along the length of the Gutta Percha cone has a tapered structure, wherein the taper angle varies progressively in the axial direction to result in a multi-taper or variable taper conical structure. The taper angles vary in small, discrete incremental steps along the length of the point, thus forming a structure having adjoining conical sections having different and discretely varying tapers at different axial sections along the length.

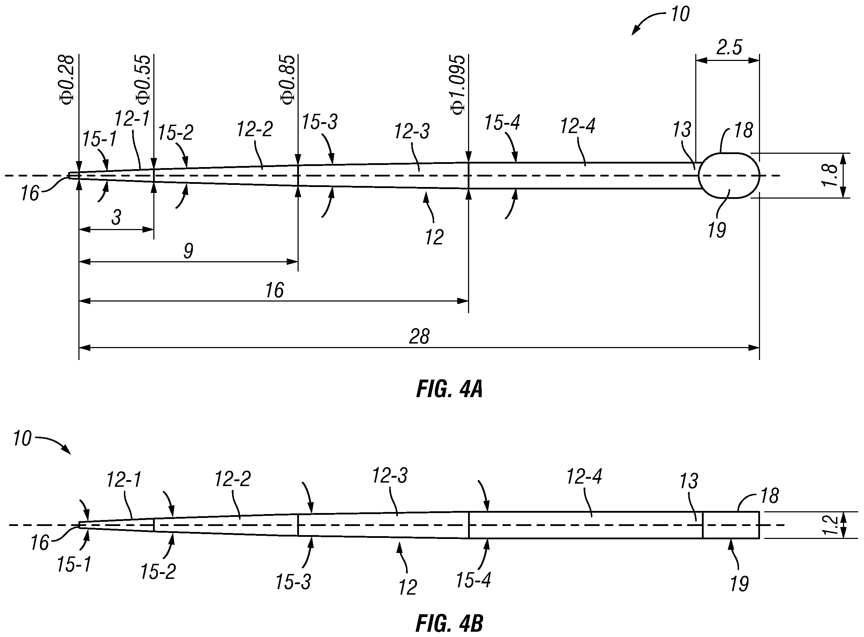

Figs. 3-5 illustrate cones 10 having multiple tapers along the respective axial length. As shown in Fig. 2, each cones 10 in Figs. 3 and 4 comprises a generally conical body 12 comprising a heat flowable material, such as Gutta Percha. The cone body 12 has a thick or large tail end 13 and a thin or small tip end 16, which has a precise taper angle (15-1) that fits in the apex end of a root canal cavity prepared using a file tool known in the dentistry field (e.g., Greater File system or Progressive Tapering File system). The diameter of each diametric section along the longitudinal axis of the body 12 is substantially circular, up to the large end 13.

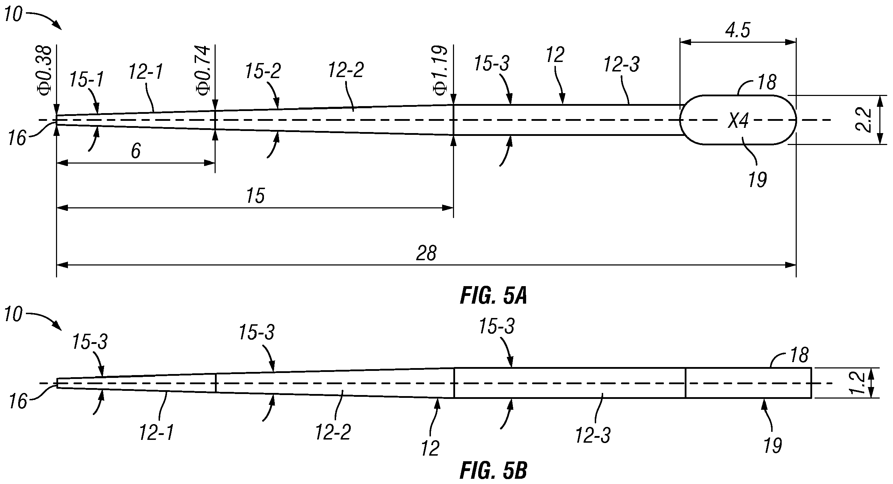

Figs. 3 and 4 illustrate cones each having four axially adjoining conical sections (12-1, 12-2, 12-3, 12-4) having different tapers or taper angles (15-1, 15-2, 15-3, 15-4) that progressively decreases from the section 12-1 at the tip end 16 to the last section 12-4 at the large tail end 13. Fig. 5 illustrate a cone having three conical sections (12-1, 12-2, 12-3) having different taper angles (15-1, 15-2, 15-3), which progressively decreases from the section 12-1 to section 12-3.

Generally:
a. tapers along the multi-taper cone range from 2% to 12% (the extent of taper pitch expressed as a % of unit axial length).
b. at location 0 - 3 mm (measured from tip end 16, which is at location 0), taper ranges from 2% to 12%.
b. at location 3 - 6 mm, taper ranges from 2% to 10%.
c. at location 6 - 12 mm, taper ranges from 2% to 8%.
d. at location 12 - 22 mm, taper ranges from 2% to 6%.

Figs. 3-5 illustrates the diameters (measured in mm) at the tip end 16, and at each boundary between adjacent sections (12-1, 12-2, 12-3, etc.), and the location (measure in mm) of such boundaries from the tip end 16. It is noted that the diameter of the last section (12-4 in Figs. 3 and 4; 12-4 in Fig. 4) is substantial constant along its length (i.e., the taper angle of these last sections is essentially substantially 0 degree). However, the taper angle of these last sections may be non-zero in other embodiments.

Based on the illustrated dimensions, one can easily determine the taper angle or taper pitch at each section of the cones. As an example, referring to Fig. 5, the tapers at: section 12-1 (0-6 mm) is 6%; section 12-2 (6-15 mm) is 5%; section 12-3 (15- 23.5 mm) is 0%.

As shown in Figs. 3-5, the tail (rear) end 13 of Gutta Percha cone 10 extends to a section that is provided with identifying indicia 19. At the tail end 13, a tab portion 18 (e.g., 2 - 4 mm length) is formed with flat surfaces. On one or both of the flat surfaces, cone configuration (e.g., taper, material, size, etc.) and/or tracking (e.g., for precise product quality tracking) information can be provided. Along with ISO color markings, dentists can easily identify the size of the cone they are selecting to fit into root canals. The identifying indicia and/or markings 19 can be easily formed by injection molding (discussed in detail below).

As described above, the taper angles vary in small, discrete incremental steps along the length of the point, thus forming a structure having adjoining conical sections having different and discretely varying tapers at different axial sections along the length. While the conical sections (12-1, 12-2, etc) have different axial lengths, the axial length of the conical sections may be similar or different. The taper angle varies continuously, gradually and smoothly along the length of the point to form a gradual arcuate or curved surface profile in the axial direction representing continuously varying taper angles (represented by the varying angles of the tangents to the curved surface). There may be a combination of continuously varying tapers and discretely varying tapers along the length of the cone.

The multi-taper cones achieve several advantages. The progressively decreasing tapers from the tip end to the large end of the cone would result in a relatively smaller diameter at the large end of the cone. Referring to the schematic depiction shown in Fig. 1C, using a multi-taper cone 10 in a root canal 600 prepared by a Progressive Tapering File, a good seal is achieved at the apex 602 region, with good filling by the cone 10 along the root canal 600 towards the orifice opening 604. This would ensure a cone having a tip taper that is sufficient to provide a tight fit with no micro-leakage at the apex of the root canal, while maintaining a smaller orifice opening 604. The multi-taper cone avoids the issue of a large orifice opening 504 associated with using a cone 506 having a single larger taper in a single taper root canal 500 prepared by a single taper file, as discussed above in connection with Fig. 1A. The multi-taper cone also avoids the issue of micro-leakage at the apex 602 region arising from using a single-taper cone 606 having a smaller taper in a multi-taper root canal 600 prepared by a Progressive Tapering File, as discussed above in connection with Fig. 1B. The multi-taper cone provides a good apical seal of the apex 602 region that is similar in size to the apex 502 region in Fig. 1A, in a root canal 600 prepared by a Progressive Tapering File.

The multi-taper cone also provides a good "tuck back" for clinicians. In order to have good sealing at the apex region of the root canal, a Gutta Percha cone must be placed up to the apex opening with a tight fit. Dentists use X-ray imaging to confirm the Gutta Percha cone placement at the apex opening. But under current practice, they still rely on the Gutta Percha cone "tug back" resistance feeling to ensure the tight seal of the apex opening. If there is insufficient "tug back" resistance sensation, it means the tip of the Gutta Percha cone is not sealing the apex opening tight enough. With single taper Gutta Percha cones, it is easy to encounter false "tug back" sensation produced by the falsely from area inside root canal other than apex opening due to Gutta Percha cone getting caught or bent in different areas in the root canal.

The multi-taper cone 10 is provided with a substantially blunt flat tip 16, having a substantially flat surface orthogonal to the longitudinal axis of the body (which is not achievable with hand-rolled cones in the prior art), instead of a bullet head shaped tip found in hand-rolled cones, for a tight apex fit. Further, the taper of the tip portion (e.g., 3 mm from the tip end) very closely matching the taper of the corresponding file. After the tip portion, the taper of the cone is decreased. With respect to the Progressive Tapering File system, the taper of the multi-taper cone after the tip portion is decreased more aggressively than the decrease in taper of the corresponding Progressive Tapering File. This will ensure that the Gutta Percha cone only "bind" at the apical region to produce a true apical "tug back" sensation, while a slight clearance is provided along the length of the Gutta Percha cone. This new multi-taper Gutta Percha cone design benefits not only Progressive Tapering file system, it also benefits Greater Taper file system for the same reasons. The multi-taper cone may be used in a root canal prepared with a single-taper file system (e.g., a Greater Taper file system) or a Progressive Tapering File system.

The multi-taper cones 10 also provide identifying indicia, which hand-rolled cones would not be able to provide.

The cone 10 (single taper or multi-taper cone) is made by molding, and in particular a thermo-pressure molding process, such as a thermo-injection molding process. The molding process of the present invention produces cones having good dimension control, within tight/small tolerances, such as ± 0.01 mm.

The thermo-injection molding system for mold the cones discussed above and hereinbelow can be based on the mold and injection molding systems disclosed in copending U.S. Patent Application No. 14/181,621 filed on February 14, 2014. For the sake of completeness, examples of injection molding systems are discussed below.

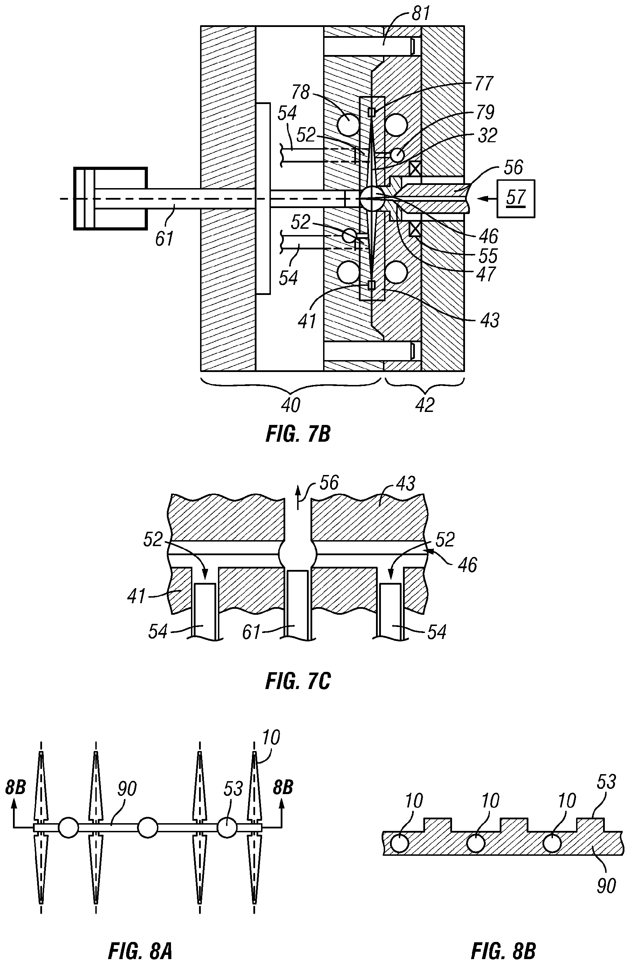

split mold is used for injection molding the cones 10 (single taper or multi-taper cones). Once again, the present invention will be described herein-below in reference to root canal filling points made with endodontic filler material including what is commonly known as dental Gutta Percha. However it is understood that the present invention could be applied to manufacturing root canal filling points based on other types of endodontic filler material, currently know or future discovered such as metallic, organic, inorganic based thermo-conducting material. The split mold design is directed to molding using two complementary mold halves that together define mold cavities for dental root canal filler points/cones (i.e., using split mold). After the two mold halves of the above described split mold is pressed together, Gutta Percha material is injected into the mold cavities, cooled to set the material, the mold halves are separated, and the molded piece is released from the retaining mold halve by pushing the piece out of the mold cavity (e.g., using push rod 61 shown in Fig. 7B).

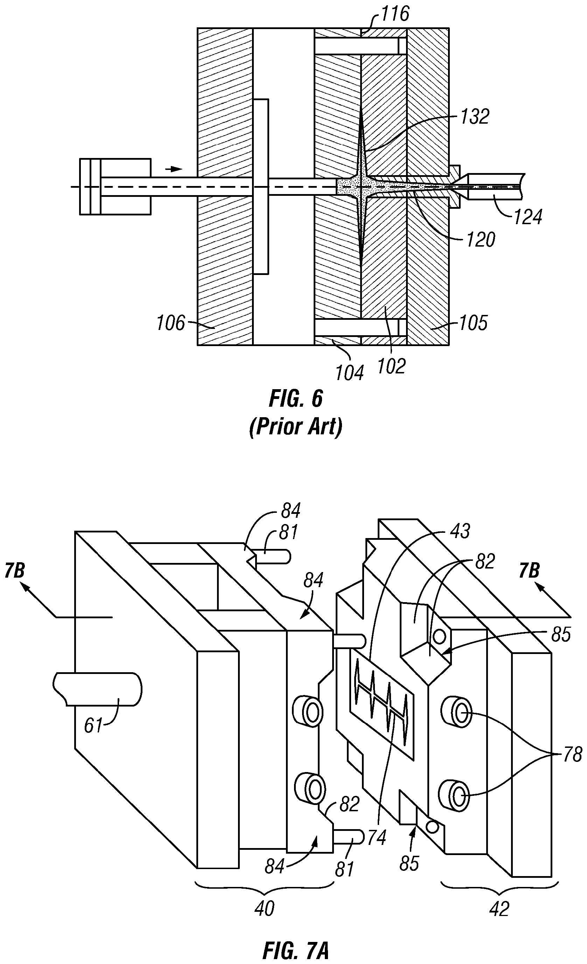

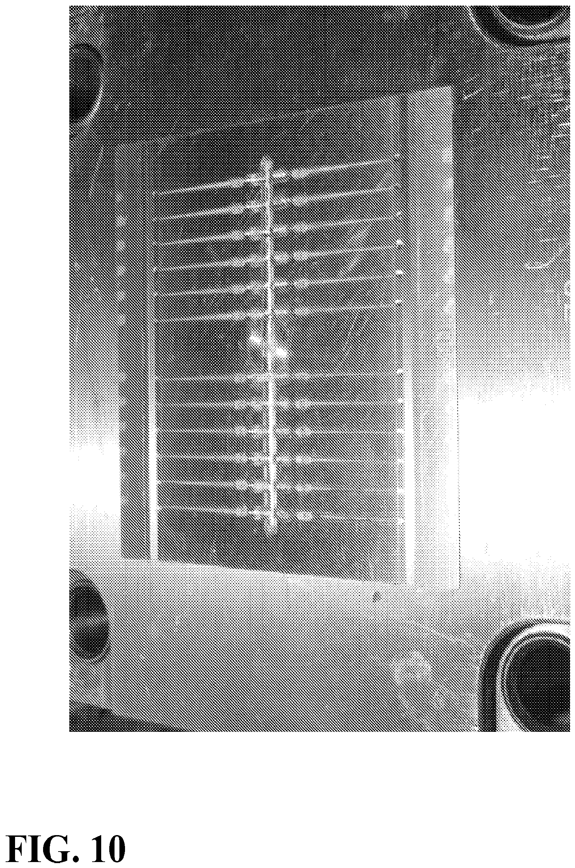

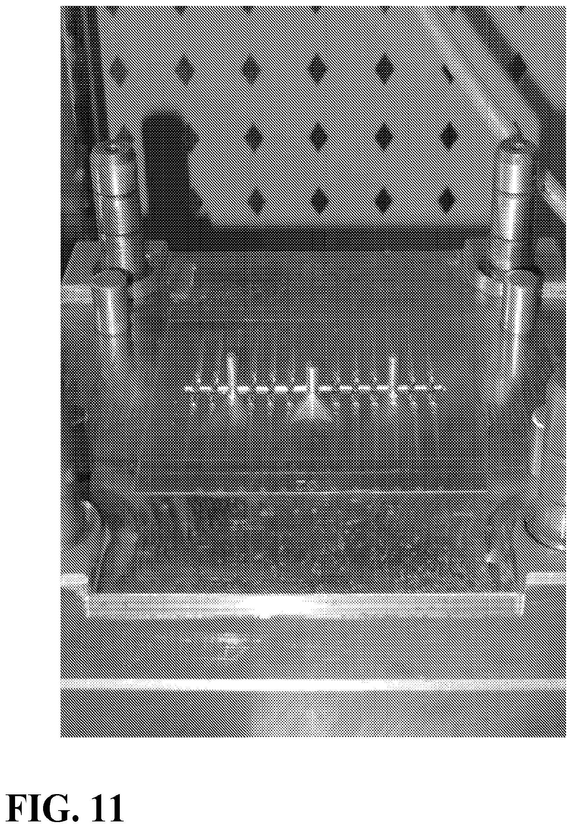

Figs. 7A - 7C illustrate one embodiment of the spilt mold. The molding process involves linear movements (e.g., lateral/horizontal, or vertical) of a two-part mold (which is commonly called the split mold) to separate and close opposing mating mold halves 40 and 42 (i.e., the mold halves are moved laterally/horizontally or vertically with respect to each other, such that the complementary molding cavity surfaces of the opposing mold halves move towards and away from each other to close or separate the two mold halves). Each move halve (40, 42) includes a frame (70, 72) supporting in a central region a mold core halve (41, 43) that defines a mold chamber 74 having a surface profile that conforms to half of a tapered cone 10 (i.e., a cone is split along its sagittal plane, which lies in the longitudinal direction of the cone and along the axis of the cone), and is a substantially identical halve of a complete mold cavity 32 that conforms to a tapered cone 10. One of the mold halves may be stationary and fixed in place, and the other mold halves is supported for movement with respect to the fixed mold halve. The two mold halves 40 and 42 open and close with respect to each other along the sagittal plane of the molded Gutta Percha points. This makes it easier to separate the finished molded Gutta Percha cones 10 from a mold halve, and with minimal or without significant distortion of the cone. Fig. 11 is a photograph of a mold halve that is stationary in the injection molding system, Fig. 10 is a photograph of a mold halve that is moved with respect to the mold halve shown in Fig. 11.

Heretofore, inventors are not aware of any Gutta Percha cones made by injection molding. In developing molded Gutta Percha points, the inventors explored conventional split mold designs and plastic injection molding processes. Referring to Fig. 6, a conventional split mold 100 has two mold halves 102 and 104 supported by frames 105 and 106. Each split mold halve 102/104 has a chamber defining the surface profile of part of the final injection product to be molded. The two halves 102 and 104 close together to make a full mold cavity 132. Pins 116 are provided for aligning the mold halves 102 and 104. One mold halve can be fixedly supported in the mold injection machine and the other mold halve is supported to move along a track with respect to the fixed mold halve, to open and close the mold. For material injection, an injection nozzle 124 is butted against the outside of the mold frame 105, and material is injected into and through a rather long injection opening pathway 120, before the material reaching the mold cavity 132.

The inventors realized that conventional split mold designs and plastic injection processes are not compatible with making Gutta Percha cones. The inventors found that conventional plastic injection molding machines, without modification in accordance with the present invention, would not be able to mold dental Gutta Percha cones due to the inherent nature of dental Gutta Percha material and the characteristics of conventional molding process not being compatible for Gutta Percha material. Split mold injection manufacturing process that were developed and used in plastic industry were designed to handle plastic materials that general have very high flow characteristic and melts at relatively low temperature. Because of the high stickiness / low flow character of dental Gutta Percha, extreme small dimension (can be as small as 0.10 mm tip diameter) of the desired products and very tight tolerance of the dimension are required. For example, for root canal filling, the Gutta Percha cones should not have significant residual mold lines (excessive material creeping from the mold cavity into the interface between a two-part mold, which remains on the cone after molding). In accordance with the present invention, conventional injection molding machine is adapted but must be modified with the inventive mold design and injection molding process in order to be able to conduct injection molding to obtain useful Gutta Percha cones of acceptable quality.

In summary, the inventors created a novel mold design and injection molding process by considering and overcoming the following issues particular to Gutta Percha material, so as to overcome the challenges of injection molding Gutta Percha cones:
1. Dental Gutta Percha material has low melting temperature and poor flow ability, which makes it difficult to fill entire mold cavity to form an ideal shaped product.
2. Because of low melting temperature of dental Gutta Percha, the residual elevated temperature inside metal mold chamber prevents Gutta Percha from hardening fast enough for a successful mold separation without Gutta Percha cone distortion.
3. Dental Gutta Percha has some stickiness when softened up, which makes it not being a very desirable material for plastic mold injection machine.
4. Dental Gutta Percha cone requires precision dimension for clinical use. The conventional plastic mold injection machine and mold design often leaves a rather large mold line which would not meet the precision required for dental Gutta Percha cone.
5. Because of dental Gutta Percha's low melting point and lack of flowability, higher temperature and higher pressure are required to extrude and inject Gutta Percha into a mold cavity. This often results in the permanent molecular changes inside dental Gutta Percha compound.

To overcome all of the above mentioned challenges, various modifications have been implemented to improve a conventional plastic injection molding system to become suitable for injection molding dental Gutta Percha material. The improvements and features incorporated into the novel dental Gutta Percha injection mold structure and injection molding process are discussed below.
A. Features to improve Gutta Percha material flowability by designing a new mold injection pathway and temperature control system:
   1. Using specially designed material heating / compaction chamber (injection cylinder 57) with high strength material and smaller diameter extrusion screw to increase extrusion pressure.
   2. Removing injection opening pathway and shortened injection nozzle 56 to reduce injection resistance. It also helps in eventual mold separation process.
   3. Adding heating ring around injection nozzle 55 to facilitate Gutta Percha flow into mold cavities 32.
   4. Adding venting channels 77 at far (tip) end of mold cavities to vent air to reduce air resistance, therefore to improve Gutta Percha flowability into the mold cavities. The air vent channels are drilled a couple of microns deep groove in the surface and at an optimal angle so only air, not the dental Gutta Percha material, is escaping.
   5. Incorporating hot/cold water circulating system 78 as part of the mold structure to preheat entire mold block for improved Gutta Percha flowability.
   6. Changing mold internal injection secondary channels 46 angulation from main channel 47 (initial passage in mold receiving material from injection) to the final mold cavities 32 to reduce flow resistance.
B. Features to improve mold thermo conductivity to make Gutta Percha cool and harden faster to assist mold separation process:
   1. Mold core halves (41, 43) are made of material with higher thermo conductivity to distribute heat faster in the internal region of the mold halves.
   2. Redesigned mold internal hot / cold water circulating system. When running ice cold water through the mold block, Gutta Percha points get cold and harden faster for easier mold automatic separation.
C. Features to control Gutta Percha stickiness by reducing its surface tension to facilitate mold separation step:
   1. Other than providing water circulating cooling, spray openings 79 are provided in the mold to spray separation lubricating agent into mold cavities to keep cavities clean and surface tension low. Therefore it will be easier to separate the cold without Gutta Percha points sticking to the mold cavity surface.
   2. Removed traditional injection opening pathway to reduce contact surface area of residual molded material. The short main injection channel 47 minimizes the resistance when separating the mold.
D. Features to improve molded product precision, to avoid mold mismatching when closing, and to reduce / eliminate mold line:
   1. To improve lateral alignment of the mold halves 40 and 42, other than locking/alignment pins (similar to the alignment pins 116 in Fig. 6) provided in conventional plastic injection mold machines, protrusions 84 and indents 85 having beveled mating surfaces 82 are provided to form gear shaped locking platforms between the mold halves 40 and 42 to improve alignment and locking of the mold halves. Specifically, one mold halve (e.g., mold halve 40 as shown) is provided with protrusions 84 with a flat top and/or indents with a flat bottom, with a beveled surface 82 extending from the flat top of the protrusions 84 and the flat bottom of the indents 83. The other mold halve is provided with matching indents and/or protrusions, with similar flat top/bottom and beveled surface. When the mold halves close and mate under pressure, the matching protrusions and indents will slowly "bite" or "grip" into each other to lock the two mold halves in precise lateral alignment across the plane of the mold cavities, so as to form mold cavities to meet the dimension of Gutta Percha point with sufficient precision suitable for clinical use. Alternatively, the mating surfaces of the mold halves may be planar without the bevels, but the bevels provide improved lateral alignment to result in mold pieces with improved results as noted above.
   2. Increased thickness of the mold frames 70 and 72, and subject the mold frames to high temperature treatment. This increases its strength and reduce deformation when pressure is applied to lock the mold halves together.
   3. Internal surfaces of mold cavities 32 are treated with Nitrogen to increase surface hardness and/or strength, thus reducing wear. This ensures the integrity of the mold cavities to allow for precision closing of the mold cavities using the mold halves, to minimize and substantially eliminate residual mold line on the molded pieces.
   4. Providing a cold water circulating system to cooling channels 78 to quickly reduce mold body temperature to minimize thermo expansion from repeated mold injection operation.
E. Features and process protocols implemented in injection molding machine to provide correct technical references specific for dental Gutta Percha material to protect its molecular stability and its properties for clinical applications:
   1. Reducing the holding volume of the heating / compacting chamber or injection cylinder 57 for preparing the final Gutta Percha material ready before injection. This minimizes the length of time for Gutta Percha material to remain inside a high temperature and high pressure chamber to avoid possible changes to its molecular structure.
   2. The holding / compacting chamber or injection cylinder 57 has several heating zones (e.g., three to five zones) to gradually increase the temperature of Gutta Percha material to its melting point as it is moved towards the injector 56. This further prevents breakdown of Gutta Percha molecular structure.

The Gutta Percha points made by the novel Gutta Percha injection molding system has improved tolerance and quality that meet the requirements for clinical use. Manufacturing efficiency is improved, reducing production costs. The molded pieces and associated injection molding process can also mark ISO size codes onto each individual Gutta Percha point to reduce the chance of dentist error in picking a wrong size / shape Gutta Percha point. Manual hand-rolled Gutta Percha points cannot include this safety feature. The novel Gutta Percha injection molding system can produce single taper Gutta Percha points or points having multi-tapers on a single point. This will satisfy clinicians' needs to have multi-tapered Gutta Percha points to match the new generation of multi-tapered root canal cleaning instruments/files.

In accordance with the present invention, given the design of the mold and molding process, the mold remains in the injection molding machine without moving between stations, as was in the earlier embodiment. Mold cleaning and preparation are easier to undertake more frequently.

The clinical aspect of root canal treatment techniques and material are evolving rapidly. Using the novel mold design and injection molding technology, challenges encountered by dental clinicians have been meet. The novel injection molding system can be adapted to evolve with new clinical challenges in dentistry.

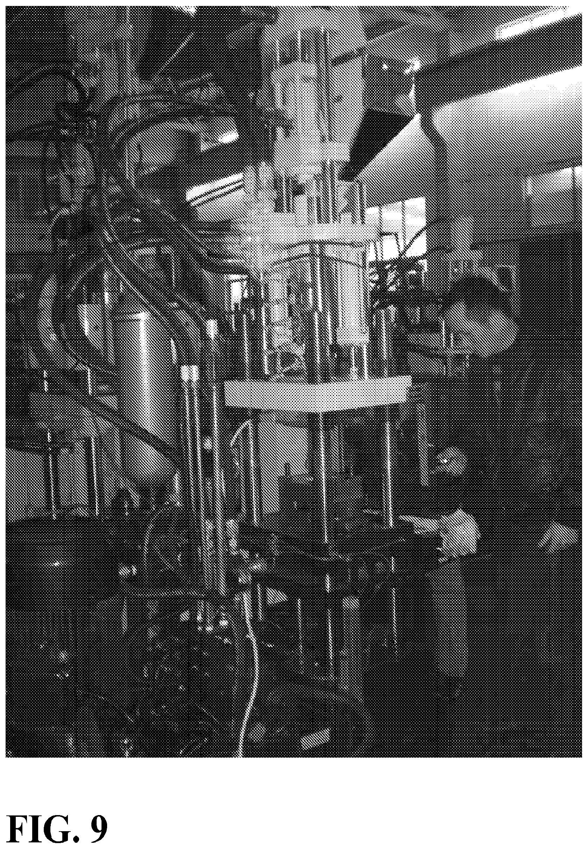

While the above embodiment illustrated in the drawings refers to mold halves supported for horizontal movements in an injection molding machine, it is contemplated that the mold halves can be supported for vertical movements in another injection molding machine, without departing from the scope of the present invention. Fig. 9 is a photograph of a vertical injection molding system incorporating the features discussed above and below.

Below are further elaborations of further improvements to the injection molding system.

Dental Gutta Percha material requires much higher pressure to inject into the mold than plastic material. This requires even tighter closing of the split mold, to ensure tight mating of the mold core halves to tightly define a mold cavity. Instead of just increasing split mold locking pressure, the mold is designed such that instead of having each mold core halve supported in its respective frame with the surface of the mold core halve flush with the surface of the frame, the mold core halve is raised a few microns with respect to the surround surface of the frame, so that the mating surface of the mold core halve protrudes above the adjacent surface of the frame. When two halves of the mold close and lock together, the mold core halves will close much tighter to ensure a complete injection of the dental Gutta Percha material with better tolerance.

To increase the injection pressure inside the cavity chamber, the diameters of the network of secondary injection channels 46 (the channels in the plane of the mold cavities) leading to the mold cavities 32 are reduced. This will allow Gutta Percha material to build up extra pressure before bursting into the cavity chamber through those reduced diameter secondary channels 46. The main injection channel in line with the injection nozzle is shortened to reduce resistance and to save expensive dental Gutta Percha material. The injection speed of the Gutta Percha material, which dictates the travel speed of the material into the mold cavities, is important to a perfect Gutta Percha cone finish.

To increase the dental Gutta Percha material flow rate, an electrical heating element is provided in the form of a ring inside the mold supporting frame where the injection nozzle meet the mold core at the main injection channel opening. This will ensure the Gutta Percha material stays hot and liquid stage when entering into the cavity chamber. The cooling channels provided in the supporting mold frame help cooling off the mold quickly after a successful injection. The length of the injection nozzle is kept to a minimum and made "fatter" to better retain heat from the heating ring.

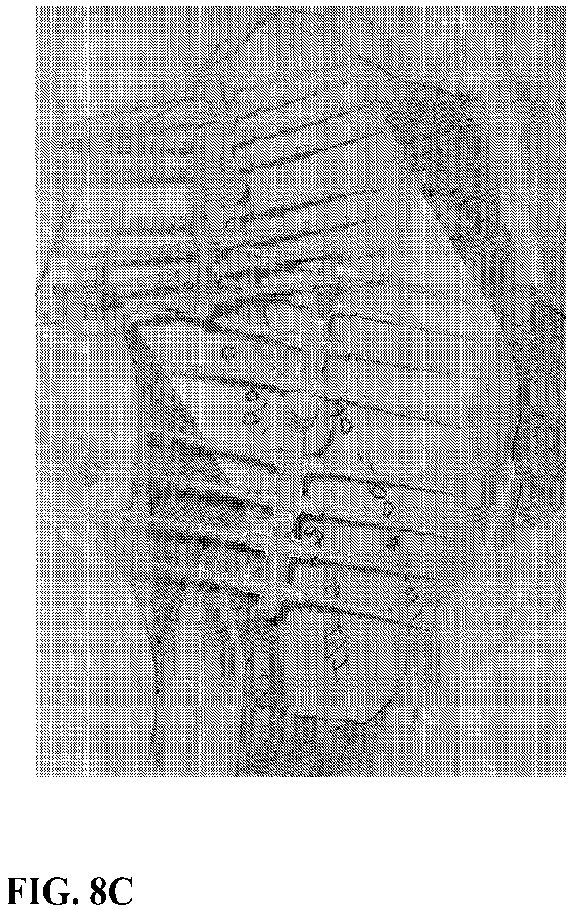

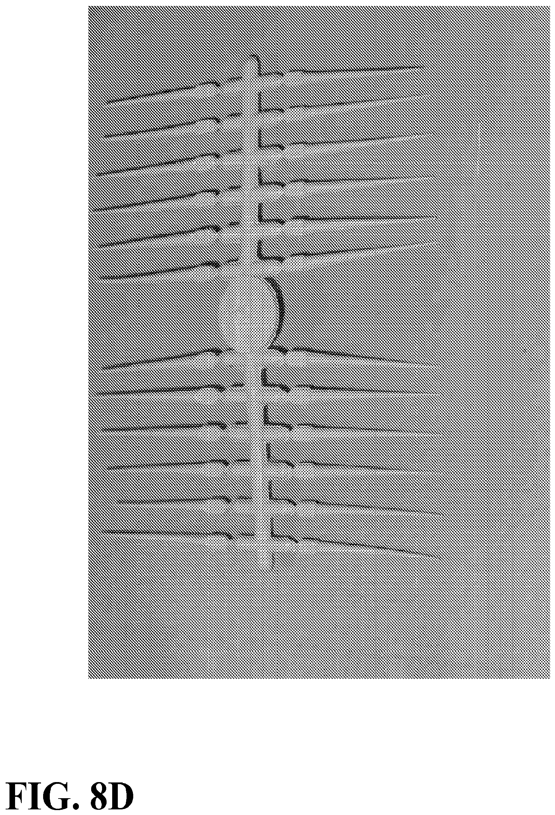

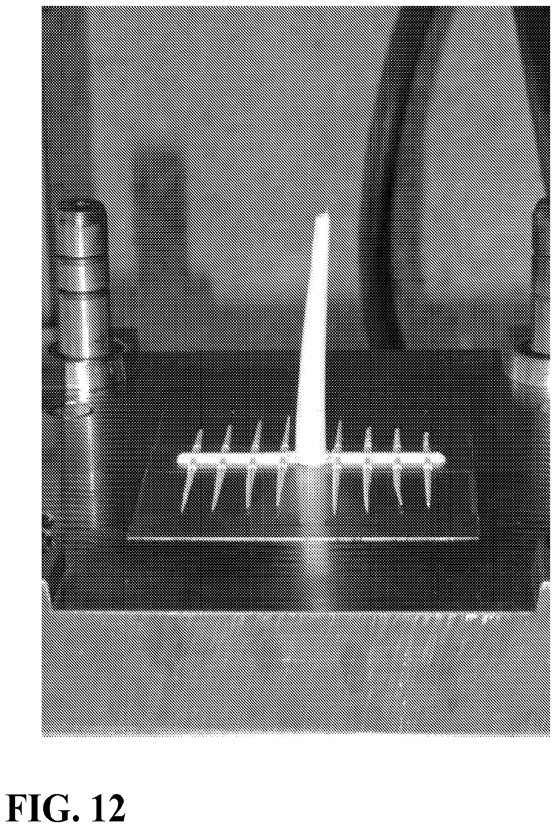

Referring to Figs. 8A to 8D, the top view and a sectional view of the structure of the overall molded structure is shown. The cones 10 are connected to a spine 90, resembling the shape of a rake, or a rack of cones 10. When separating the two mold halves after injection and cooling, one challenge was to retain all mold injected Gutta Percha cones 10 on one of the mold halves (e.g., the fixed mold halve 40), to avoid the pieces of cones 10 from being separated from the spine 90, so that all the cones 10 can be collected and moved together in a cluster. Stub openings 52 are provided in the stationary mold core half 41. These stub openings 52 are slight undercut from the secondary injection channel 46. Gutta Percha material will end up being injected into these stub openings 52 to form stubs 53. See also Figs. 7B and 7C. After the cooling and mold separation, the Gutta Percha stubs 53 will hold the rack of Gutta Percha cones 10 on the mold core half 41. Metal push rods 54 are provided from behind the stub openings 52 to push the finished stub 53 from the mold core halve 41. Fig. 8C is a photograph showing the side of the rack structure having the stubs 53. Fig. 8D is a photograph showing the other side of the rack structure (of a different rack). Fig. 12 is a photograph showing a rack of cones remaining on the stationary mold halve after separation of the mold halves.

If Gutta Percha compound is kept inside pre-heating and injection compartment for too long, the Gutta Percha material will degrade. The size of pre-heating and injection cylinder is reduced in length and in diameter to hold less amount of Gutta Percha material and to increase injection pressure and speed. Heating stations in this cylinder is reduced from 5 to 3. The temperature setting for heating stations are set in a progressively decreasing manner, from injection nozzle to back end of the cylinder, e.g., at 140, 120, 90 Celsius degree, at the respective station.

Because it uses very small amount of Gutta Percha material for each injection batch, the drive screw in the injection cylinder 57 (the cylinder behind the injection nozzle 56, which holds the material ready to be injected) in the molding machine barely starts rotating to push the material to be injected, and hydraulic pressure barely builds up to the optimum level for injection, yet Gutta Percha material is already injected from cylinder into mold chamber. This results in incomplete mold injection and results in not fully filled mold cavities. To correct these problems, the "driving screw" inside the injection cylinder 57 is redesigned so it moves less amount of Gutta Percha material to the front (nozzle end) with more rotations of the screw. At same time, forward plunging motion is provided to axially push the screw to achieve very fast high pressure injection.

Another change for the injection cylinder is to change the size and the length of the injection nozzle 56. The injection cylinder 57 and nozzle 56 temperature is much higher than the mold temperature. When the nozzle 56 locks into mold injection channel opening, high temperature is needed to ensure the proper flow of Gutta Percha material. Sudden cool off can "freeze" the Gutta Percha material inside the nozzle. A heating element 55 is provided inside the mold around the tip of the nozzle 56 to keep the region around the nozzle opening reasonably warm. The nozzle length and internal diameter are also reduced to reduce Gutta Percha material traveling time from injection cylinder 57 to mold cavity 32. The nozzle's outer diameter is increased so it retains more heat.

Injecting Gutta Percha material requires much higher pressure than injecting plastic. An instant compressed gas chamber system is created to assist hydraulic system to deliver maximum and "instant" pressure needed. A liquid nitrogen gas cylinder is provided to help increase pressure build up speed. Air pressure travels faster than hydraulic pressure. The air pressure system is added at the front of the hydraulic pressure system. When it is ready to inject and pressure system is activated, both air and hydraulic system delivers pressure to give the instant push. This is an important element of obtaining optimum injection time and pressure. Short injection time is preferred, without the negative effect of higher injection pressure. A balance of fast injection (reaction) time and optimum injection pressure is preferred.

Concerning timing of the injection, bigger hydraulic pump with faster reaction time is employed. Since only a very small amount of Gutta Percha material is injected into mold cavities each cycle of injection, and injection time is just a few mile-second, machine needs to build up optimum pressure before injection cylinder screw push out the Gutta Percha material. Further, pressure needs to be activated without delay when screw starts pushing forward, similar to a plunder in a syringe. Computer controlled faster reacting pump further improves injection reaction timing, in addition to gas assisted hydraulic system noted above.

To further secure fast injection time and optimum injection pressure combination, a vacuum line is provided at space just in front of injection nozzle 57, near the main mold channel 47. Before injection starts, vacuum pump will remove most of the air from mold main channel 47 and secondary channels 46. The vacuum pump turned off for injection to take place. This will reduce resistance and increase injection speed. This vacuum feature is preferably used when using a harder type dental Gutta Percha material.

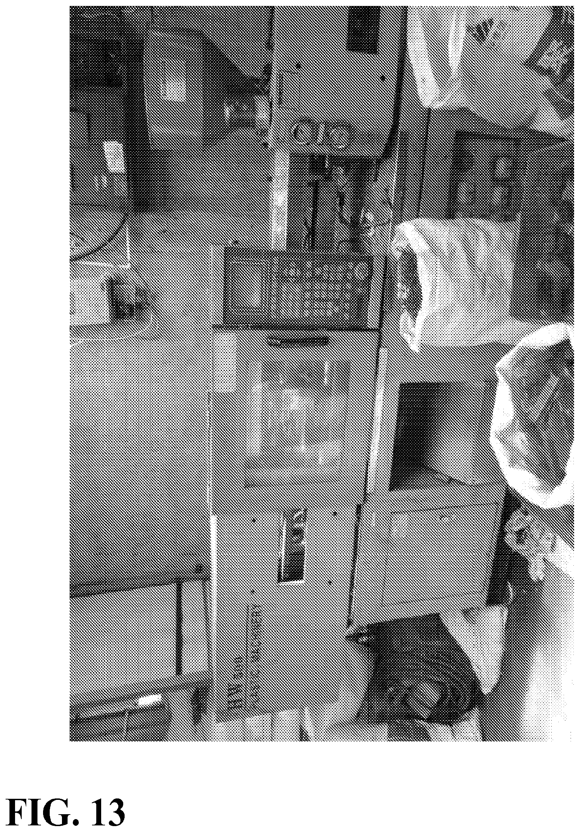

Fig. 13 is a photograph of a horizontal injection molding system incorporating the features discussed above.

The mold separation process can be further improved by using a mold injection machine having a vertical axis of movement for the mold halve. With this vertical configuration, the stationary (fixed) mold halve 40 is at the bottom, with the moveable mold halve 42 movable with respect to the fixed mold halve 40. This stationary fixed mold halve 40 has the locking stub openings 52 behind the cone cavity chamber to retain the Gutta Percha cones in this mold halve as discussed above, when the top mold halve 42 is lifted and separated. After separation, push rods 54 and 61 from underneath the bottom mold halve 40 (see Fig. 7C) will push the entire molded piece (a rack of cones 10) upward. Then a mechanical robotic arm can be provided to pick up the Gutta Percha cone rack and place it on a conveyer for further processing and packaging.

To further improve production efficiency and throughput, two similar stationary mold halves 40 can be provided side by side, and can move horizontally along precision guide rails or on a precision sliding table, to be place sequentially below the top mold halve 42. The two mold halves 40 therefore take turns to mate with top mold halve 42, so one mold halve 40 would be going through an injection molding cycle while the other mold halve 40 is processed to remove the molded rack of cones and prepared for the next injection cycle.

While the present invention has been described above in connection with the illustrated embodiments, the scope of patent invention is specified in the appended claims.

## Claims

1. A thermo-pressure molding process of making a plurality of cones (10) for dental root canal fillings, each cone (10) comprising:
a body (12) having a generally axisymmetric conical structure, wherein at least a section along the body (12) has a tapered structure, and wherein the tapered structure has different tapers along the axial direction, varying progressively to define a multi-taper conical structure, the method comprising:
(i) providing a split mold having a plurality of cavities defined in the mold corresponding to the shape of the cones and having spray openings (79) provided in the mold to spray separation lubricating agent into the mold cavities to keep cavities clean and surface tension low;
(ii) injecting material into the cavities in the mold; and
(iii) molding the cones each having a body (12) comprising the injected material.

## Patentansprüche

1. Thermodruck-Formverfahren zur Herstellung einer Vielzahl von Kegeln (10) für Zahnwurzelkanalfüllungen, wobei jeder Kegel (10) Folgendes umfasst:
einen Körper (12) mit einer im Allgemeinen axialsymmetrischen konischen Struktur, wobei mindestens ein Abschnitt entlang des Körpers (12) eine sich verjüngende Struktur aufweist, und wobei die sich verjüngende Struktur unterschiedliche Verjüngungen entlang der axialen Richtung aufweist, die sich progressiv verändern, um eine sich mehrfach konische Struktur zu definieren, wobei das Verfahren Folgendes umfasst:
(i) Bereitstellen einer geteilten Form mit einer Vielzahl von Kavitäten, die in der Form definiert sind, die der Form der Kegel entsprechen, und mit Sprühöffnungen (79), die in der Form vorgesehen sind, um Trennmittel-Schmiermittel in die Formkavitäten zu sprühen, um Kavitäten sauber und die Oberflächenspannung niedrig zu halten;
(ii) Einspritzen von Material in die Kavitäten in der Form; und
(iii) Formen der Kegel, die jeweils einen Körper (12) aufweisen, der das eingespritzte Material umfasst.

## Revendications

1. Procédé de moulage par thermo-pression consistant à fabriquer une pluralité de cônes (10) pour les obturations de canal radiculaire dentaire, chaque cône (10) comprenant :
un corps (12) ayant une structure conique généralement axisymétrique, dans lequel au moins une section le long du corps (12) a une structure conique, et dans lequel la structure conique a des effilages différents le long de la direction axiale, variant progressivement pour définir une structure conique à effilage multiple, le procédé comprenant :
(i) la fourniture d'un moule divisé ayant une pluralité de cavités définies dans le moule correspondant à la forme des cônes et ayant des ouvertures de pulvérisation (79) fournies dans le moule pour pulvériser un agent lubrifiant de séparation dans les cavités du moule pour garder les cavités propres et la tension superficielle faible ;
(ii) l'injection de matériau dans les cavités du moule ; et
(iii) le moulage des cônes chacun ayant un corps (12) comprenant le matériau injecté.
